# FASCICULE DE BREVET EUROPEEN

(11) **EP 0 942 507 B1**
(45) Date de publication et mention de la délivrance du brevet: **02.01.2002**
(21) Numéro de dépôt: 99400526.2
(22) Date de dépôt: 04.03.1999
(51) Int. Cl.: H02G 15/117, H02G 15/076, H02G 15/013, G02B 6/44

(54) **Boîtier étanche d'appareillage à accés pour câble**
Abgedichtetes Gehäuse einer Vorrichtung mit Zugang zu einem Kabel
Sealed box of a device with access to a cable

(30) Priorité: 09.03.1998 FR 9802822
(43) Date de publication de la demande: 15.09.1999
(73) Titulaire: Nexans, 75008 Paris (FR)
(72) Inventeur: Milanowski, Michel, 60540 Anserville (FR); Lepeuve, Alain, 78590 Noisy Le Roi (FR); Vincent, Alain, 77230 Juilly (FR)
(74) Mandataire: Feray, Valérie

(56) Documents cités:
- EP-A- 0 695 900

## Description

L'invention concerne les boîtiers d'appareillage étanches, auxquels se relient des câbles, notamment des câbles électriques et/ou optiques de télécommunications et plus particulièrement les boîtiers d'épissurage.

Dans une forme de réalisation usuelle, de tels boîtiers comportent au moins deux parties dont l'une est par exemple un corps creux qui reçoit au moins un câble, éventuellement traversant, et qui loge un appareillage. Une seconde partie constituant par exemple un couvercle vient se positionner sur une ouverture d'accès que comporte la première partie pour l'obturer de manière étanche. Il est connu de placer un joint d'allure linéaire, éventuellement sans fin et par exemple un joint en matériau élastomère, dans la zone où la seconde partie vient s'appuyer sur la première, en bordure de l'ouverture. Dans une forme classique de réalisation, l'ouverture de la première partie est longée par une rainure périphérique de logement pour joint linéaire face à laquelle vient se positionner une nervure complémentaire de la seconde partie qui est prévue pour venir comprimer le joint, lorsqu'elle est mise en place. La compression du joint par la seconde partie assure l'étanchéité du boîtier au niveau de la zone de la première partie qui entoure l'ouverture. Bien entendu une rainure et une nervure peuvent être interverties, elles peuvent aussi être combinées en fonction de besoins particuliers à des fins d'obtention d'une bonne étanchéité.

La pénétration d'un câble dans un boîtier étanche tel qu'envisagé ci-dessus implique la mise en oeuvre de moyens particuliers si l'étanchéité du boîtier doit être préservée. Il est connu d'utiliser des moyens de type presse-étoupe, venant se placer dans un orifice de passage de câble ménagé dans une paroi d'une partie, par exemple sous la forme d'un trou circulaire. Toutefois, ceci implique d'enfiler le câble au travers de l'orifice, ce qui est parfois peu pratique, notamment lorsque le câble passe en traversée dans le boîtier. Pour éviter cet inconvénient, il est connu de prévoir le passage d'un câble dans une fente qui débouche en bordure d'une ouverture.

Le document EP-A-695900 présente ainsi un accès pour câble prévu en zone de joint entre deux parties complémentairement échancrées à cet effet. Les moyens d'étanchéité relatifs à cet accès comportent essentiellement un serre-câble ceinturant le câble, un joint d'allure cylindrique traversé par le câble et un organe presseur de joint, du genre rondelle. Ce dernier est placé de l'autre côté du joint par rapport au serre-câble et il vient appuyer le joint contre une paroi complémentaire d'une tubulure assujettie au niveau des échancrures en regard des deux parties de boîtier lorsque ces parties sont convenablement assemblées et que l'organe presseur exerce une pression parallèlement à l'axe du câble à partir du serre-câble.

La réalisation proposée dans ce document présente l'inconvénient de nécessiter un relativement grand nombre de pièces séparées et d'impliquer une phase de mise en place relativement délicate. De plus l'obtention de l'étanchéité requise peut s'avérer difficile à obtenir notamment en présence d'ailettes sur le joint cylindrique et en particulier lorsqu'il est nécessaire d'effectuer une mise en place dans le cadre d'une intervention sur un boîtier déjà installé sur site.

L'invention propose donc un boîtier étanche d'appareillage, notamment un boîtier d'épissurage pour câble électrique et/ou optique, ledit boîtier comportant une première partie dont une ouverture est obturée de manière étanche par une seconde partie à laquelle est associé au moins un joint linéaire venant se positionner entre les parties dans une zone de la première partie où la seconde partie vient s'appuyer en bordure d'ouverture.

Selon l'invention, la première partie du boîtier présente au moins une fente d'insertion, s'ouvrant dans la première partie au niveau de cette bordure dans la zone d'appui de la seconde partie où passe le joint linéaire, et porte une tubulure d'étanchéité positionnée au niveau de chaque fente d'insertion et entourant celle-ci, sauf dans la direction où cette fente s'ouvre en bordure d'ouverture et où ladite tubulure comporte une fente longitudinale permettant une insertion transversale du câble, sans enfilement, dans la première partie du boîtier lorsque ce dernier est ouvert, et la tubulure reçoit un organe d'étanchéité, dit joint de tubulure, formé par un manchon dont une extrémité est latéralement munie d'un élément saillant venant se placer en bordure d'ouverture dans la fente d'insertion de manière à assurer l'étanchéité du boîtier à ce niveau en réalisant une continuité de zone d'appui pour le joint linéaire, lorsque le manchon apte à être positionné autour du câble est enfoncé à l'intérieur de la tubulure contre la paroi interne de laquelle ce manchon s'appuie de manière étanche, sous l'action d'un dispositif presseur qui est monté en extrémité de tubulure pour comprimer conjointement le manchon dans la tubulure et un joint de câble dans une cavité axiale du manchon, ledit joint de câble étant apte à être monté et comprimé autour du câble à l'intérieur de la cavité axiale du manchon où il s'appuie de manière étanche sous la pression.

Le boîtier comporte aussi au moins l'une des caractéristiques additionnelles suivantes:
- l'élément saillant de l'organe d'étanchéité comporte une rainure de continuité agencée pour permettre d'assurer une continuité de zone d'appui de joint avec une rainure périphérique déterminant un chemin d'appui pour le joint linéaire en bordure d'ouverture, lorsque le manchon de l'organe d'étanchéité est positionné en fond de la tubulure d'étanchéité, la rainure de continuité portée par cet organe étant alors placée entre les deux extrémités de rainure périphérique qui bordent la fente où pénètre l'organe;
- la rainure de continuité prévue sur l'élément saillant de l'organe d'étanchéité comporte au moins une nervure saillant depuis le fond de cette rainure de continuité, situé au-dessous du niveau du fond de la rainure périphérique de joint linéaire, jusqu'au-dessus du niveau du fond de cette rainure périphérique entre les extrémités de laquelle la nervure se positionne, lorsque l'organe d'étanchéité est pressé en fond de la tubulure d'étanchéité, pour permettre un appui du joint linéaire selon deux zones linéaires de part et d'autre de cette nervure, lorsque la seconde partie est en place sur la première et qu'elle presse sur ce joint linéaire ;
- alternativement la rainure de continuité prévue sur l'élément saillant de l'organe d'étanchéité comporte au moins une gorge dont les rives sont en pente vers le fond et dont le fond est au-dessous du niveau du fond de la rainure périphérique de première partie entre les extrémités de laquelle cette gorge se positionne, lorsque l'organe d'étanchéité est pressé en fond de la tubulure d'étanchéité, pour permettre un appui du joint linéaire selon une zone linéaire sur chaque rive de gorge, lorsque la seconde partie est en place sur la première et qu'elle presse sur ce joint linéaire ;
- le manchon de l'organe d'étanchéité est d'allure au moins approximativement cylindrique et est garni de godrons d'étanchéité au niveau de l'extrémité de cet organe qui pénètre en fond de la tubulure, de manière à prendre appui par ces godrons contre la paroi latérale interne de cette tubulure.

L'invention, ses caractéristiques et ses avantages sont précisés dans la description qui suit en liaison avec les figures évoquées ci-dessous.

La figure 1 présente une vue en perspective d'un exemple de boîtier d'appareillage étanche constitué en deux parties et des éléments d'étanchéité propres à un accès de câble selon l'invention, ces derniers étant montrés en perspective éclatée.

La figure 2 présente une vue en coupe partielle selon I-I de l'accès présenté sur la figure 1 avec les éléments d'étanchéité selon l'invention en position finale sur un câble.

La figure 3 présente une vue en coupe selon I-I d'un organe d'étanchéité, dit joint de tubulure, selon l'invention et d'une portion de boîtier avec laquelle cet organe coopère.

La figure 4 présente une vue de face du joint de tubulure présenté sur la figure 3.

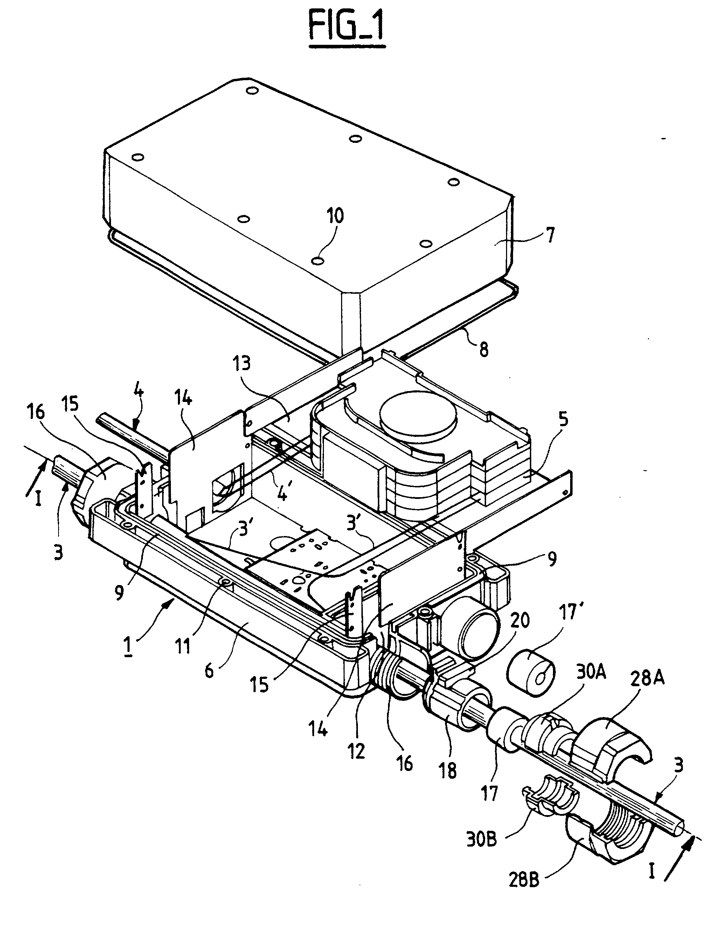

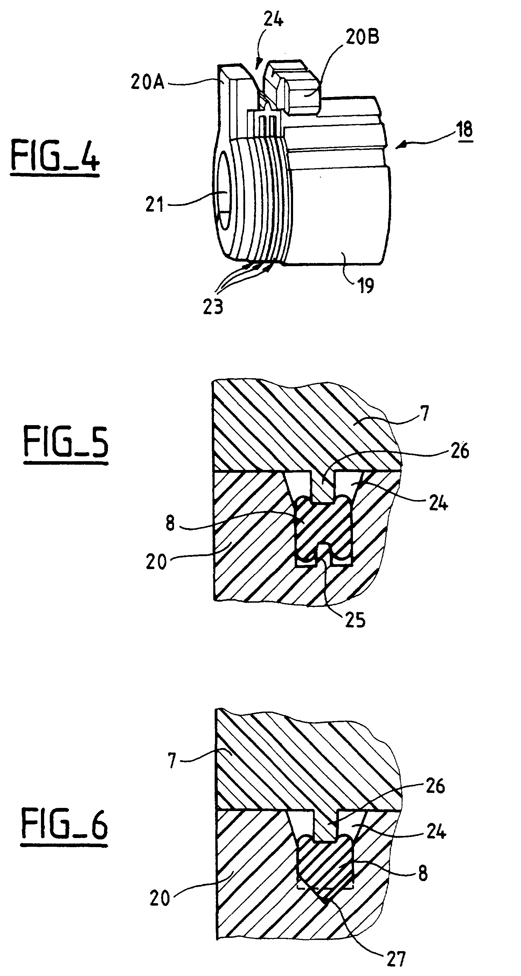

Les figures 5 et 6 présentent deux variantes de réalisation d'un élément de continuité de rainure comporté par un joint de tubulure pour un joint linéaire. Le boîtier d'appareillage 1, étanche, présenté ouvert en figure 1, est ici supposé être un boîtier d'épissurage pour un câble optique 3 comportant une pluralité de fibres 3' sur au moins certaines desquelles il est prévu de réaliser des piquages permettant le raccordement individuel de fibres 4' d'au moins un câble de dérivation 4. Il est ici supposé à titre d'exemple que deux fibres 4' du câble de dérivation 4 sont raccordés chacune par piquage à une des fibres 3' du câble 3, via un module optique approprié 5. La constitution d'un tel module n'est pas développée ici dans la mesure où, classique, elle est de plus sans rapport direct avec l'objet de l'invention.

Dans l'exemple présenté, le boîtier comporte une première partie 6 constituée par un corps creux et une second partie 7 formant couvercle et venant obturer une ouverture du corps creux de manière étanche, le corps et le couvercle étant par exemple réalisés en un matériau moulé. Un joint linéaire 8, de diamètre initial donné, est prévu positionné dans une zone où le couvercle 7 vient s'appuyer en bordure de l'ouverture du corps creux, afin assurer une fermeture étanche du corps creux 6 par la couvercle 7. Dans l'exemple de réalisation illustré ici, le joint linéaire 8 est supposé venir se loger dans une rainure périphérique 9 du corps creux qui entoure l'ouverture que vient fermer le couvercle 7. Ce dernier est supposé comporter une nervure périphérique, notamment montrée de profil et en coupe sur la figure 5. Cette nervure vient pénétrer dans la rainure périphérique du corps creux et presser le joint 8 à des fins d'étanchéité, lorsque le corps creux du boîtier est obturé par le couvercle 7. La fixation du couvercle 7 est par exemple assurée au moyen de vis passant au travers de trous 10 appropriés pour venir se visser dans des alésages taraudés 11 ménagés dans le corps creux en périphérie de l'ouverture. Ces alésages sont ici ménagés au-delà de la rainure périphérique 9 à des fins d'étanchéité.

Dans l'exemple présenté, le câble 3 traverse le boîtier 1 de part en part et le corps creux comporte à cet effet deux fentes d'insertion pour câble parallèlement réalisées chacune dans une paroi opposée, seule l'une de ces fentes d'insertion, référencée 12, étant montrée vide sur la figure 1, la fente parallèle étant occupée d'une manière qui sera précisée plus loin. Chacune des deux fentes d'insertion prévues pour le passage d'un même câble débouche en bordure de l'ouverture du corps creux et ici de la rainure périphérique 9 qu'elle traverse, dans une zone d'appui prévue pour le couvercle. Cette disposition permet l'insertion transversale d'un câble dans le corps creux lorsque l'ouverture n'est pas obturée par recouvrement par le couvercle 7.

Comme connu par ailleurs, il est possible de dégager au moins certaines des fibres d'un câble du gainage commun qui les entourent dans ce câble pour pouvoir les raccorder à d'autres fibres d'un ou de plusieurs câbles de dérivation 4 au niveau de modules de raccordement 5, comme montré pour les fibres référencée 3' issues du câble 3 et ici supposées raccordées chacune à une fibre 4' d'un câble de dérivation 4 dans un des modules de raccordement 5. Ces derniers sont ici supposés empilés sur une plaque porteuse 13 articulée sur deux éléments 14 d'une structure de support fixée dans le boîtier. Cette articulation permet à la plaque 13 de pivoter, par exemple de 180° d'angle, d'une position d'ouverture où les modules de raccordement 5 sont accessibles de l'extérieur du boîtier à une position de fermeture où ces modules viennent se loger dans le corps creux 6 qui peut alors être fermé au moyen du couvercle 7. Dans la réalisation présentée, chaque élément 14 se termine en limite de la fente 12 de passage de câble qu'il borde et il est complété par un support auxiliaire 15 de plaque porteuse fixé dans le corps creux et situé de l'autre côté de la fente 12 considérée.

Pour des raisons d'étanchéité, le boîtier selon l'invention comporte une tubulure, dite d'étanchéité, 16 saillant à l'extérieur du corps creux au niveau de chacune des fentes 12 prévues pour permettre une introduction transversale de câble, sans enfilement, dans le corps creux. Chaque tubulure d'insertion 16 est fendue longitudinalement de manière à libérer un passage de fil qui correspond à la fente 12 du corps creux auprès de laquelle cette tubulure est placée et en conséquence du côté de l'embouchure de cette fente de corps creux située en bordure d'ouverture.

L'accès pour câble réalisé au niveau d'un boîtier 1 par l'intermédiaire d'une fente 12 et d'une tubulure fendue 16 implique la mise en oeuvre d'un presse-étoupe spécifique pour permettre un passage étanche d'un câble dans le boîtier.

Selon une variante de réalisation connue, un presse-étoupe usuel comporte un joint dit de câble destiné à venir ceinturer un câble contre lequel il se plaque sous l'action d'un dispositif presseur venant se positionner sur la tubulure. Cette dernière est traversée par le câble et loge le joint de câble.

Dans la réalisation envisagée, le joint de câble, ici référencé 17, est préférablement un joint fendu, ce qui permet de le monter transversalement en un point quelconque d'un câble, sans qu'il ait à être enfilé sur ce câble depuis une extrémité. Dans la réalisation présentée, le joint de câble 17 est un joint d'allure cylindrique réalisé par exemple en un matériau élastomère de faible dureté, dont le diamètre extérieur est déterminé. Il est prévu divers diamètres intérieurs de joint de câble pour un même diamètre extérieur de manière à permettre le montage de câbles de diamètre différents dans des accès de même dimension, deux joints 17 et 17' de diamètres intérieurs différents étant présentés en figure 1.

Dans la réalisation envisagée, un joint de câble 17 ou 17' vient se loger dans un organe d'étanchéité 18, ici dénommé joint de tubulure, comportant une partie formée par un manchon 19 pour câble qui est agencée pour pouvoir s'enfoncer à l'intérieur d'une tubulure 16.

L'exemple de joint de tubulure 18 présenté sur les figures 1 à 4 se présente sous la forme d'un manchon creux 19 d'allure grossièrement cylindrique qui comporte un élément 20 saillant latéralement à une de ses extrémités.

Cette dernière est destinée à venir se positionner en fond de tubulure fendue vers l'intérieur du boîtier, lorsque le joint de tubulure est en place. Elle est axialement traversée par un conduit 21 prévu pour autoriser le passage d'un câble 3, le conduit 21 se prolonge par une cavité cylindrique axiale 22 vers l'autre extrémité du manchon 19. La cavité 22 est prévue pour recevoir un joint de câble 17 introduit axialement et elle débouche donc à l'extérieur du manchon à cette fin.

Dans une forme préférée de réalisation, le manchon 19 est radialement fendu sur toute sa longueur pour pouvoir être monté transversalement sur un câble 3, en un point quelconque, sans avoir à être enfilé par une des extrémités de ce câble.

Sur au moins une partie de sa longueur, le manchon 19 est d'allure cylindrique et possède un diamètre extérieur légèrement inférieur à celui d'une portion de tubulure 12 dans laquelle il est susceptible de venir coulisser en l'obturant.

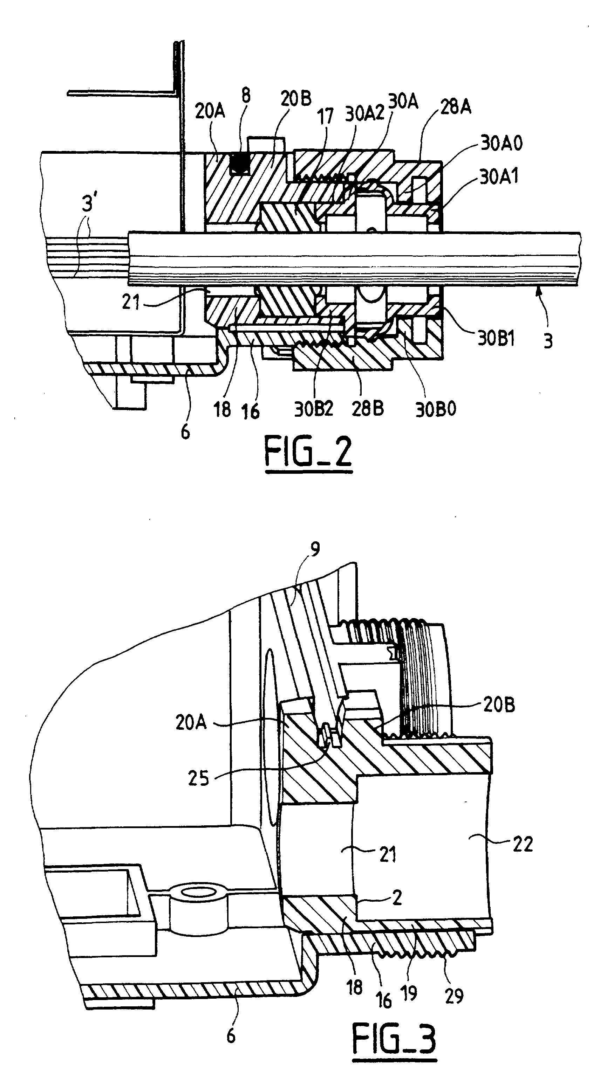

Dans l'exemple illustré sur les figures 3 et 4, le manchon 19 d'un joint de tubulure 18 comporte une série de godrons périphériques 23, ici parallèles et ménagés en relief sur la majeure partie de son pourtour, à proximité de celle de ses extrémités qui est destinée à être introduite en premier dans la tubulure 12 où ce manchon se loge. Les godrons 23 s'écrasent contre la paroi interne de la tubulure et participent à l'étanchéification à ce niveau, lorsque le joint de tubulure est en position sur un câble 3 entrant dans le boîtier via l'accès dont fait partie la tubulure 12 considérée.

A cet effet, dans une forme préférée de réalisation, le matériau constituant le corps creux 6 et en particulier les tubulures 18 qu'il comporte, est réalisé en un matériau thermoplastique dont la dureté est supérieure à celle du matériau utilisé pour un joint de tubulure 18 qui est elle-même supérieure à celle du matériau utilisé pour un joint de câble 17.

L'élément saillant 20, situé à l'une des extrémités d'un joint de tubulure, comporte une rainure 24 qui est destinée à venir se placer dans une embouchure de fente 12 entre les deux extrémités de rainure 9 situées de part et d'autre de cette embouchure de fente. Cette rainure 24 assure une continuité du chemin d'appui de joint 8 que forme la rainure 9. Comme déjà indiqué plus haut, il est aussi possible d'utiliser une ou éventuellement plusieurs portions de joint sur le pourtour d'une ouverture de corps creux en fonction d'impératifs particuliers qui ne seront pas développés ici, et dans ce cas, l'élément saillant 20 rainuré vient assurer une continuité de chemin pour tout élément de joint 8 venant se positionner au niveau de l'embouchure d'une fente 12.

Dans la réalisation présentée, l'élément saillant 20 d'un joint de tubulure 18 comporte une rainure 24 réalisée transversalement par rapport à l'axe longitudinal du joint entre une saillie dite d'extrémité 20A et une saillie dite de butée 20B de cet élément. La saillie d'extrémité 20A est conformée pour pouvoir entrer par coulissement entre les bords d'une fente 12 et plus particulièrement entre les deux extrémités de rainure 9 bordant cette fente. La saillie de butée 20B sert à positionner la rainure 24 de l'élément saillant 20 d'un joint de tubulure dans l'alignement de la rainure 9 au voisinage duquel est située la tubulure fendue 16 où le joint de tubulure considéré est alors enfoncé. A cet effet la saillie de butée 20B vient par exemple en appui contre la paroi extérieure du corps creux qui porte la tubulure 16 au voisinage de la fente 12 associée à cette tubulure. Dans la réalisation présentée, la saillie de butée 20B comporte deux parties qui sont agencées pour surplomber les bords de la fente longitudinale d'une tubulure 16, lorsque le manchon 20 qui porte cette saillie est introduit dans cette tubulure et pour par ailleurs venir appuyer chacune contre un bord différent de fente 12 de corps creux. Le dimensionnement de l'élément saillant 20 et en particulier celui de la saillie 20B sont réalisés de manière connue en soi pour que soit systématiquement obtenu un positionnement de la rainure 24 de cet élément saillant 20 dans le prolongement d'une rainure 9.

Par ailleurs, les différences de tolérance de fabrication susceptibles d'être tenues, d'une part pour le joint de tubulure 18 et d'autre part pour le corps creux 6, ne permettent pas d'assurer avec certitude que les fonds des rainures 9 et 24 soient au même niveau dans la zone où ces fonds sont voisins, lorsque le joint de tubulure est en place.

En conséquence, le joint est calculé pour que le fond d'une rainure 24 vienne toujours se positionner à un niveau légèrement inférieur à celui de la rainure 9 interrompue que cette rainure 24 vient prolonger. Le fond de rainure 24 est conformé de manière à recevoir un joint linéaire 8 en appui sur au moins deux zones linéaires et longitudinales d'étanchéité, lorsque ce joint 8 est pressé par le couvercle 7 du boîtier dans la rainure 9 et dans la rainure 24 de l'élément saillant 20 considéré. Selon une première variante de réalisation, une bonne étanchéité peut être obtenue en garnissant le fond de la rainure 24 d'au moins une nervure longitudinale 25 positionnée de manière à faire face à la nervure d'appui de joint 26 du couvercle à ce niveau, comme montré sur la figure 5. Le joint 8 d'étanchéité entre couvercle et corps creux est alors compressé dans la rainure lorsque le couvercle est enfoncé et il vient se plaquer de part et d'autre de chaque côté de la nervure par son fond selon deux zones linéaires d'appui.

Selon une seconde variante de réalisation, ceci peut aussi être obtenu en ménageant une gorge longitudinale 27 à rives en pente vers le fond de gorge et par exemple une gorge en V comme montré sur la figure 6. Là encore, la gorge 27 est prévue positionnée de manière à faire face à la nervure d'appui de joint 26 du couvercle à ce niveau, comme illustré sur la figure 6. Le joint 8 d'étanchéité entre couvercle et corps creux est alors compressé dans la rainure lorsque le couvercle est enfoncé et vient se plaquer contre chacune des deux rives de la gorge 27 selon une zone linéaire d'appui.

Selon l'invention et comme illustré sur la figure 2, le maintien en position et la mise en compression d'un joint de tubulure dans une tubulure fendue 16 est assuré par l'intermédiaire d'un dispositif presseur qui est préférablement constitué de parties distinctes prévues pour être accouplées les unes aux autres autour du câble 3.

Ce dispositif presseur comporte un écrou constitué de deux parties distinctes 28A, 28B complémentaires prévues pour être accouplées l'une avec l'autre autour d'un câble 3 de manière à constituer un écrou susceptible de se visser en extrémité d'une tubulure 12. Cet écrou est destiné à comprimer un manchon 19 de joint de tubulure 18 dans la tubulure sur laquelle il se visse et conjointement un joint de câble 17 d'une part sur le câble 3 traversant ce joint et d'autre part dans la cavité axiale 22 du manchon 19 avec l'assistance d'une douille de pression constituée de deux parties distinctes 30A, 30B complémentaires prévues pour être accouplées l'une avec l'autre autour du câble 3.

La douille de pression est longitudinalement fendue en deux parties 30A, 30B, elle a une portion cylindrique centrale saillante lui permettant de venir périphériquement en butée d'un côté sur une couronne interne d'appui 30A0, 30B0 que comporte un écrou 28A, 28B et de l'autre côté sur un manchon 19 par une partie cylindrique, ici référencée 30A2, 30B2. Cette dernière a un diamètre extérieur inférieur à celui de la partie cylindrique centrale. Une autre partie cylindrique 30A1, 30B1 est située de l'autre côté de la partie centrale par rapport à la partie 30A2, 30B2, elle a même diamètre extérieur et une longueur différente, de manière que la douille puisse être retournée et exploitée avec des joints de câble de deux longueurs différentes. L'extrémité de la partie cylindrique de douille, telle la partie 30A2, 30B2 sur la figure 2, qui vient en pression sur un joint de câble 17 enfoncé dans une tubulure 12 presse ce joint, d'une part, sur le câble 3 que ce joint entoure et, d'autre part, contre la paroi du joint de tubulure 19 où il se loge dans la tubulure 12, lorsque l'écrou 28A, 28B est vissé sur cette tubulure. Cette pression est ici limitée par la venue en butée de la partie cylindrique 30A2, 30B2 en bout de tubulure 12. Le joint de tubulure 19 est immobilisé contre la paroi externe du boîtier dans la tubulure 12 par l'appui contre cette paroi de la saillie de butée 20B qu'il comporte. Le joint 8 est alors susceptible d'être positionné dans la rainure 9 du boîtier et dans la rainure 24 de joint de tubulure qui la complète et le boîtier peut être fermé de manière étanche par le positionnement du couvercle 7.

## Revendications

1. Boîtier étanche d'appareillage (1), notamment boîtier d'épissurage, pour câble électrique et/ou optique, ledit boîtier comportant une première partie (6) dont une ouverture est obturée de manière étanche par une seconde partie (7) à laquelle est associé au moins un joint linéaire (8) venant se positionner entre les parties dans une zone de la première partie où la seconde partie vient s'appuyer en bordure d'ouverture, **caractérisé en ce que** la première partie (6) du boîtier présente au moins une fente d'insertion (12), s'ouvrant dans la première partie au niveau de cette bordure dans la zone d'appui de la seconde partie où passe le joint linéaire (8), et porte une tubulure d'étanchéité (16) positionnée au niveau de chaque fente d'insertion (12) et entourant celle-ci, sauf dans la direction où cette fente d'insertion s'ouvre en bordure d'ouverture et où ladite tubulure (16) comporte une fente longitudinale, permettant une insertion transversale du câble, sans enfilement, dans la première partie du boîtier lorsque ce dernier est ouvert, et **en ce que** la tubulure (16) reçoit un organe d'étanchéité (18), dit joint de tubulure, formé par un manchon (19) dont une extrémité est latéralement munie d'un élément saillant (20) venant se placer en bordure d'ouverture dans la fente d'insertion (12) de manière à assurer l'étanchéité du boîtier à ce niveau en réalisant une continuité de zone d'appui pour le joint linéaire (8), lorsque le manchon (19) apte à être positionné autour du câble est enfoncé à l'intérieur de la tubulure contre la paroi interne de laquelle ce manchon s'appuie de manière étanche, sous l'action d'un dispositif presseur (28A, 28B, 30A, 30B) qui est monté en extrémité de tubulure pour comprimer conjointement le manchon dans la tubulure et un joint de câble (17) dans une cavité axiale du manchon, ledit joint de câble (17) étant apte à être monté et comprimé autour du câble à l'intérieur de la cavité axiale du manchon où il s'appuie de manière étanche sous la pression.

2. Boîtier, selon la revendication 1, **caractérisé en ce que** l'élément saillant (20) de l'organe d'étanchéité (18) comporte une rainure de continuité (24) agencée pour permettre d'assurer une continuité de zone d'appui de joint avec une rainure périphérique (9) déterminant un chemin d'appui pour le joint linéaire (8) en bordure d'ouverture, lorsque le manchon (18) de l'organe d'étanchéité est positionné en fond de la tubulure d'étanchéité, la rainure de continuité (24) portée par cet organe étant alors placée entre les deux extrémités de rainure périphérique (9) qui bordent la fente d'insertion (12) où pénètre l'organe d'étanchéité.

3. Boîtier, selon la revendication 2, **caractérisé en ce que** la rainure de continuité (24), prévue sur l'élément saillant de l'organe d'étanchéité comporte au moins une nervure (25) saillant depuis le fond de cette rainure de continuité, situé au-dessous du niveau du fond de la rainure périphérique (9) de joint linéaire, jusqu'au-dessus du niveau du fond de cette rainure périphérique (9) entre les extrémités de laquelle la nervure se positionne, lorsque l'organe d'étanchéité est pressé en fond de la tubulure d'étanchéité, pour permettre un appui du joint linéaire selon deux zones linéaires de part et d'autre de cette nervure, lorsque la seconde partie est en place sur la première et qu'elle presse sur ce joint linéaire.

4. Boîtier, selon la revendication 2, **caractérisé en ce que** la rainure de continuité (24) pour joint linéaire, prévue sur l'élément saillant de l'organe d'étanchéité, comporte au moins une gorge dont les rives sont en pente vers le fond et dont le fond est au-dessous du niveau du fond de la rainure périphérique (9) entre les extrémités de laquelle cette gorge se positionne, lorsque l'organe d'étanchéité est pressé en fond de la tubulure d'étanchéité, pour permettre un appui du joint linéaire selon une zone linéaire sur chaque rive de la gorge, lorsque la seconde partie est en place sur la première et qu'elle presse sur ce joint linéaire.

5. Boîtier, selon au moins l'une des revendications 1 à 4, **caractérisé en ce que** le manchon (19) de l'organe d'étanchéité est d'allure au moins approximativement cylindrique et est garni de godrons d'étanchéité (23) au niveau de l'extrémité de cet organe qui pénètre en fond de la tubulure (16), de manière à prendre appui par ces godrons contre la paroi latérale interne de cette tubulure.

6. Boîtier, selon au moins l'une des revendications 1 à 5, **caractérisé en ce que** le joint de câble (17) et l'organe d'étanchéité (18) sont radialement fendus sur toute leur longueur pour pouvoir être montés par insertion transversale et sans enfilement sur le câble, et le dispositif presseur (28A, 28B, 30A, 30B) est constitué de parties distinctes prévues pour être accouplées autour du câble.

7. Boîtier, selon l'une des revendications là 6, **caractérisé en ce que** le dispositif presseur incorpore un écrou qui est constitué de deux parties distinctes (28A, 28B) complémentaires prévues pour être accouplées l'une avec l'autre autour du câble (3) et qui vient se visser en extrémité de la tubulure (12) de manière à comprimer conjointement le manchon de l'organe d'étanchéité (18) dans cette tubulure et le joint de câble (17) sur le câble et dans une cavité axiale du manchon avec l'assistance d'une douille de pression constituée de deux parties distinctes (30A, 30B) complémentaires prévues pour être accouplées l'une avec l'autre autour du câble (3).

8. Boîtier, selon la revendication 7, **caractérisé en ce que** la douille de pression, longitudinalement fendue en deux parties (30A, 30B), a une portion cylindrique centrale saillante lui permettant de venir périphériquement en butée d'un côté sur une couronne interne d'appui que comporte l'écrou (28A, 28B) et de l'autre côté sur le manchon de l'organe d'étanchéité (19), cette partie centrale saillante étant entourée de deux parties cylindriques (30A1, 30B1 et 30A2, 30B2), de diamètre inférieur et de longueurs différentes, alternativement exploitables pour venir en pression contre une extrémité du joint de câble (17), sous l'effet d'un vissage de l'écrou sur la tubulure (16) qui le porte.

## Patentansprüche

1. Dichtes Apparategehäuse (1), insbesondere Spleissgehäuse, für elektrische und/oder optische Kabel, wobei das Gehäuse einen ersten Teil (6) umfasst, bei dem eine Öffnung in dichter Art und Weise durch einen zweiten Teil (7) verschlossen ist, mit dem zumindest eine lineare Dichtung (8) verbunden ist, die sich zwischen den Teilen positioniert, in einer Zone des ersten Teiles, in dem der zweite Teil in Anlage gegen den Rand der Öffnung kommt, **dadurch gekennzeichnet, dass** der erste Teil (6) des Gehäuses zumindest ein Einfügefenster (12) aufweist, das sich in dem ersten Teil auf der Höhe des Randes in der Anlagezone des zweiten Teils öffnet, wo die lineare Dichtung (8) verläuft und trägt einen Dichtstutzen (16), der auf der Höhe eines jeden Einfügefensters (12) positioniert ist und dieses umgibt, außer in der Richtung, wo sich das Einfügefenster zum Rand der Öffnung öffnet und wo der Stutzen (16) ein Längsfenster umfasst, welches das transversale Einfügen des Kabels ermöglicht, ohne einfädeln, in den ersten Teil des Gehäuses, wenn das Letzere geöffnet ist, und dadurch, dass der Stutzen (16) ein Dichtorgan (18) aufnimmt, nämlich eine Stutzendichtung, gebildet aus einer Muffe (19), deren eines Ende seitlich mit einem vorstehenden Element (20) versehen ist, welches in Anordnung am Rand der Öffnung in dem Einfügefenster (12) kommt, um die Dichtigkeit des Gehäuses auf diesem Niveau sicherzustellen, indem eine Kontinuität der Anlagezone für die Lineardichtung (8) realisiert ist, wenn die Muffe (19), welche um das Kabel herum positioniert werden kann, in das Innere des Stutzens gedrückt ist, wobei gegen die Innenwand desselben die Muffe in dichter Art und Weise anliegt, unter der Wirkung einer Preßeinrichtung (28A, 28B, 30A, 30B) die am Ende des Stutzens montiert ist, um gleichzeitig die Muffe in dem Stutzen und eine Kabeldichtung (17) in einer axialen Ausnehmung der Muffe zu komprimieren, wobei die Kabeldichtung (17) um das Kabel im Inneren der axialen Ausnehmung der Muffe montiert und komprimiert werden kann, wo sie in dichter Art und Weise unter Druck anliegt.

2. Gehäuse nach Anspruch 1, **dadurch gekennzeichnet, dass** das vorstehende Element (20) des Dichtorgans (18) eine Kontinuitätsnut (24) umfasst, die vorgesehen ist, um es zu ermöglichen, eine Kontinuität der Anlagezone der Dichtung mit einer peripheren Nut (9) sicherzustellen, welche einen Anlagebereich für die Lineardichtung (8) am Rand der Öffnung definiert, wenn die Muffe (18) des Dichtorgans am Boden des Dichtstutzens positioniert ist, wobei die Kontinuitätsnut (24), die von diesem Organ getragen wird, dann zwischen den zwei Enden der peripheren Nut (9) angeordnet ist, die das Einfügefenster (12) begrenzt, wo das Dichtorgan eindringt.

3. Gehäuse nach Anspruch 2, **dadurch gekennzeichnet, dass** die Kontinuitätsnut (24), vorgesehen an dem vorspringenden Element des Dichtorgans, zumindest eine Feder (25) umfasst, die über den Boden der Kontinuitätsnut vorsteht, angeordnet unterhalb des Niveaus des Bodens der peripheren Nut (9) der Lineardichtung, bis oberhalb des Niveaus des Bodens der peripheren Nut (9), wobei die Feder zwischen den Enden derselben in Anordnung kommt, wenn das Dichtorgan auf den Boden des Dichtstutzens gedrückt ist, um eine Anlage der Lineardichtung gemäß zwei linearer Zonen beidseitig dieser Feder zu ermöglichen, wenn der zweite Teil an Ort und Stelle auf dem ersten ist und auf die Lineardichtung drückt.

4. Gehäuse nach Anspruch 2, **dadurch gekennzeichnet, dass** die Kontinuitätsnut (24) für die Lineardichtung, vorgesehen auf dem vorspringenden Element des Dichtorgans, zumindest einen Hals umfasst, dessen Ränder abschüssig zum Boden hin sind, und dessen Boden unterhalb des Niveäus des Bodens der peripheren Nut (9) liegt, wobei zwischen den Enden derselben der Hals in Anordnung kommt, wenn das Dichtorgan zum Boden des Dichtstutzens gedrückt ist, um eine Anlage der Lineardichtung in einem linearen Bereich an jedem Rand des Halses zu ermöglichen, wenn der zweite Teil an Ort und Stelle auf demselben ist und auf die Lineardichtung drückt.

5. Gehäuse nach einem der Ansprüche 1 bis 4, **dadurch gekennzeichnet, dass** die Muffe (19) des Dichtorgans zumindest annäherungsweise zylindrisch ausgebildet ist und mit Dichtzonen (23) auf der Höhe des Endes des Organs versehen ist, das zum Boden des Stutzens (16) eindringt, um in Anlage über die Zungen gegen die seitliche Innenwand des Stutzens zu kommen.

6. Gehäuse nach einem der Ansprüche 1 bis 5, **dadurch gekennzeichnet, dass** die Kabeldichtung (17) und das Dichtorgan (18) radial über ihre gesamte Länge geschlitzt sind, damit sie durch transversales Einfügen und ohne Einfädeln auf dem Kabel montiert werden können, und dass die Presseinrichtung (28A, 28B, 30A, 30B) aus unterschiedlichen Teilen gebildet ist, die vorgesehen sind, um um das Kabel gekoppelt zu werden.

7. Gehäuse nach einem der Ansprüche 1 bis 6, **dadurch gekennzeichnet, dass** die Preßeinrichtung eine Mutter einschließt, die aus zwei unterschiedlichen und komplementären Teilen (28A, 28B) gebildet ist, vorgesehen, um miteinander um das Kabel (3) gekoppelt zu werden und die auf das Ende des Stutzens (12) geschraubt ist, um gleichzeitig die Muffe des Dichtorgans (18) in dem Stutzen und die Kabeldichtung (17) auf dem Kabel zu komprimieren, sowie in einer axialen Ausnehmung der Muffe, mit Hilfe einer Presshülse, die aus zwei unterschiedlichen komplementären Teilen (30A, 30B) gebildet ist, vorgesehen zur Kopplung aneinander, um das Kabel (3).

8. Gehäuse nach Anspruch 7, **dadurch gekennzeichnet, dass** die Presshülse, die längs geschlitzt in zwei Teile (30A, 30B) ist, einen zylindrischen, zentralen vorspringenden Teil hat, der es ermöglicht, peripher in Kontakt einerseits mit einem Innenanlagekranz zu kommen, der die Mutter (28A, 28B) umfasst und andererseits mit der Muffe des Dichtorgans (19) wobei der zentrale vorspringende Teil von zwei zylindrischen Teilen (30A1, 30B1 und 30A2, 30B2) umgeben ist, mit einem kleineren Durchmesser und unterschiedlichen Längen, die alternativ nutzbar sind, um einen Druck gegen ein Ende der Kabeldichtung (17) auszuüben, unter der Wirkung des Anziehens der Mutter auf den Stutzen (16) der diese trägt.

## Claims

1. A sealed equipment box (1), in particular a splice box for receiving an electrical and/or optical cable, said box including a first portion (6) having an opening which is closed off in sealed manner by a second portion (7) with which at least one linear gasket (8) is associated, which linear gasket is positioned between the portions in a zone of the first portion against which the second portion abuts at the edge of the opening, said box being **characterized in that** the first portion (6) has at least one insertion slot (12) opening out in the first portion at said edge in the abutment zone against which the second portion abuts, through which zone the linear gasket (8) passes, and carries a sealing neck (16) positioned at each insertion slot (12) and surrounding said slot except in the direction in which the insertion slot opens out at the edge of the opening, and where said neck (16) is provided with a longitudinal slot enabling the cable to be inserted transversely, without any threading being necessary, into the first portion of the box when said box is open, and **in that** the neck (16) receives a sealing member (18), referred to as the "neck gasket", formed by a sleeve (19), one end of which is provided with a laterally projecting element (20) that is placed at the edge of the opening and in the insertion slot (12) so as to guarantee that the box is sealed at this level by providing continuity for the abutment zone for the linear gasket (8), when the sleeve (19) that is suitable for being positioned around the cable is pushed into the neck, against the inside wall of which the sleeve abuts in sealed manner under the action of a presser device (28A, 28B, 30A, 30B) which is mounted at the end of the neck so as to compress simultaneously the sleeve in the neck and a cable gasket (17) in an axial cavity in the sleeve, said cable gasket (17) being suitable for being mounted and compressed around the cable inside the axial cavity of the sleeve against which it is pressed in sealed manner.

2. A box according to claim 1, **characterized in that** the projecting element (20) of the sealing member (18) is provided with a continuity groove (24) organized to provide continuity for a gasket abutment zone by co-operating with a peripheral groove (9) determining an abutment path for the linear gasket (8) at the edge of the opening, the continuity being provided when the sleeve (18) of the sealing member is positioned at the inner end of the sealing neck, the continuity groove (24) carried by the member then being placed between the two peripheral-groove ends (9) that flank the insertion slot (12) into which the sealing member penetrates.

3. A box according to claim 2, **characterized in that** the continuity groove (24) provided on the projecting element of the sealing member is provided with at least one rib (25) projecting from the bottom of the continuity groove, which bottom is situated below the level of the bottom of the peripheral groove (9), the rib projecting to above said level of the bottom of the peripheral groove (9) between the ends of which the rib is positioned when the sealing member is pressed to the inner end of the sealing neck, so as to enable the linear gasket to abut against two linear zones on either side of the rib, when the second portion is in place on the first portion, and when it presses against said linear gasket.

4. A box according to claim 2, **characterized in that** the continuity groove (24) provided in the projecting element of the sealing member is provided with at least one channel whose banks slope towards the bottom of the channel, and whose bottom is below the level of the bottom of the peripheral groove (9) between the ends of which the channel is positioned when the sealing member is pressed to the inner end of the sealing neck, so as to enable the linear gasket to abut against a linear zone on each bank of the channel, when the second portion is in place on the first portion and when it presses on the linear gasket.

5. A box according to at least one of claims 1 to 4, **characterized in that** the sleeve (19 of the sealing member is at least approximately cylindrical in appearance, and is provided with sealing beads (23) at that end of the sealing member which penetrates to the inner end of the neck (16), so as to abut via the beads against the inside sidewall of said neck.

6. box according to at least one of claims 1 to 5, **characterized in that** the cable gasket (17) and the sealing member (18) are radially split over their entire lengths so that they can be mounted on a cable by transverse insertion without having to be threaded over the cable, and the presser device (28A, 288, 30A, 308) is made up of distinct portions organized to be coupled together around the cable.

7. A box according to any one of claims 1 to 6, **characterized in that** the presser device incorporates a nut which is made up of two distinct complementary portions (28A, 28B) which are organized to be coupled together around the cable (3) and which are screwed onto the end of the neck (12) so as to compress, simultaneously, the sleeve of the sealing member (18) in the neck, and the cable gasket (17) on the cable and in an axial cavity in the sleeve, with the assistance of a presser socket made up of two distinct complementary portions (30A, 30B) organized to be coupled together around the cable (3).

8. A box according to claim 7, **characterized in that** the presser socket that is longitudinally split into two portions (30A, 30B) has a projecting central cylindrical portion that enables it to come into peripheral abutment on one side against an intemal abutment ring provided in the nut (28A, 28B) and on the other side against the sealing member sleeve (19), the projecting central portions being flanked by two cylindrical portions (30A1, 30B1; 30A2, 30B2) of smaller diameter and of different lengths, either of which can be used to press against one end of a cable gasket (17) under the effect of the nut being screwed onto the neck (16) carrying it.
